# DEMANDE DE BREVET EUROPEEN

(11) **EP 2 148 464 A1**
(43) Date de publication de la demande: **27.01.2010**
(21) Numéro de dépôt: 09166135.5
(22) Date de dépôt: 22.07.2009
(51) Int. Cl.: H04L 9/32, H04L 29/06

(54) **Architecture interne pour des equipements de securite nomades**

(30) Priorité: 25.07.2008 FR 0804251
(71) Demandeur: Thales, 92200 Neuilly-sur-Seine (FR)
(72) Inventeur: Maximilien, Benoît, 78150, LE CHESNAY (FR); Virlogeux, Didier, 75012, PARIS (FR)
(74) Mandataire: Dudouit, Isabelle

(57) **Abrégé**

Dispositif sécurisé nomade (10) permettant d'assurer la confidentialité de données mémorisée ou la sécurité des échanges de données entre au moins deux domaines de niveaux de sensibilité différents **caractérisé en ce qu**'il comporte en combinaison au moins les éléments suivants :
• une interface connectique (1, 4) adaptée à assurer l'échange entre un domaine utilisateur étant dans un environnement protégé et le dispositif nomade sécurisé,
• un composant de confiance (3) placé en coupure entre ladite interface connectique (1, 4) et le domaine extérieur (2, 7, 8),
• un moyen d'authentification (9, 12) adapté à autoriser l'accès à un nombre de services en fonction des droits possédés par un utilisateur,
• ledit dispositif sécurisé comportant une ligne de cloisonnement LC entre deux desdits domaines de niveaux de sensibilité différents, le composant de confiance placé en coupure est disposé sur la ligne LC et étant disposé entre les deux domaines, les flux de données échangées entre les deux domaines passant obligatoirement par ledit composant.

## Description

L'objet de l'invention concerne une nouvelle architecture pour des équipements de sécurité dédiés à la mobilité. Celle-ci offre la capacité à un utilisateur de protéger des informations sensibles dans un environnement nomade. Le mot « nomade » dans la présente description, concerne des dispositifs, matériels ou encore des objets pouvant stocker de l'information qui sont facilement transportables. Autrement dit, l'architecture selon l'invention offre la capacité à l'utilisateur qui le souhaite d'échanger des informations de manière sécurisée en utilisant différents postes lors de ses déplacements. Elle est, par exemple, utilisée dans le domaine de la sécurité des systèmes d'informations (SSI). A titre d'exemple, il est possible de citer les clés de type USB.

Cette nouvelle architecture adresse plusieurs besoins comme le stockage d'informations sensibles (fonction de coffre-fort), une capacité cryptographique (comme l'authentification, le chiffrement de données ou bien la signature de données informatiques qui garantit l'authentification du document vis-à-vis du signataire) et la possibilité d'offrir un environnement de confiance local pour utilisateur nomade.

L'objet de la présente invention répond, notamment à une demande des utilisateurs qui souhaitent échanger, transporter ou protéger des informations sensibles lors de leurs déplacements, voyages ou missions. En effet, une telle mobilité entraîne un certain de nombre de risques de perte de l'information et une vulnérabilité aux attaques (écoute, intrusions, etc.). Dans la suite de la description, les initiales ES désignent des équipements de sécurité (ressources cryptographiques, chiffreurs, etc.).

En général, la sécurité exigée pour certaines applications est un frein à la communication et à la mobilité car elle entraîne des contraintes techniques, organisationnelles et de sécurité.

Les contraintes techniques sont liées à l'utilisation d'outils de chiffrement. Ces derniers alourdissent la charge de traitement des processeurs, ralentissent les communications et diminuent la bande passante pour les données utiles en rajoutant des entêtes, ou champs supplémentaires dans les trames des données ou messages échangés.

Des contraintes organisationnelles sont ajoutées, comme l'habilitation et la qualification du personnel, la gestion du parc des équipements contenant des informations sensibles avec une traçabilité des équipements, un suivi des affectations et du paramétrage (droits des utilisateurs), une gestion des versions des différents logiciels, une gestion de la configuration, la gestion de ses utilisateurs habilités, etc.

Les contraintes liées à la sécurité elle-même sont ajoutées, telles que la nécessité d'utiliser un processus spécifique pour pré-personnaliser ou personnaliser un équipement de sécurité (enregistrement, mise à la clé, injection des premiers secrets, etc.).

Une des techniques utilisées dans l'art antérieur propose en général une sécurité lourde, complexe, centralisée sur des « grosses machines » par exemple des serveurs redondés, des routeurs réseaux, des pare-feu de site sensibles, etc. Cette sécurité est maîtrisée par des experts (administrateur réseau, responsable chiffre, officier de sécurité, directeur des Systèmes d'information, etc...). Elle est conçue, réalisée, et installée sur des équipements de haut niveau technologique.

Cette sécurité est souvent éloignée de l'utilisateur final et de fait elle est peu adaptée à ses besoins et à ses contraintes, en particulier lors de ses déplacements. Comme elle apparaît trop contraignante, une nouvelle tendance voit le jour : une sécurité qui se rapproche de l'utilisateur afin d'être la plus proche possible de ses besoins et de ses contraintes. En effet, suivant cette approche, c'est l'utilisateur qui manipule l'information et qui est le plus apte à prendre une décision sur le niveau de sécurité adéquat et à décider des contraintes réseau qui lui sont adaptées.

Les solutions existantes et connues du Demandeur proposent en général des équipements figés, dont le niveau de sécurité n'est pas forcément adapté aux attaques d'aujourd'hui (solutions vulnérables et non résistantes aux attaques d'intrusion logiques ou mécaniques) et aux caractéristiques limitées (en taille mémoire par exemple) et dont les mécanismes d'authentification sont faibles (simple mot de passe, empreinte digitale, etc.).

Beaucoup d'industriels proposent aussi des modules sécurisés de type clés USB dites de sécurité mais aucun pour l'instant ne peut prétendre proposer une solution d'architecture en coupure et avoir la certification ISO 15408 EAL3 (abrégé anglo-saxon de Evaluation Assurance Level) ou supérieur. Le niveau EAL est un système standard d'évaluation composé de 7 niveaux d'assurance selon les Critères Communs.

Aucun des différents équipements actuellement connus ne propose un ensemble complet et cohérent de services (du réseau virtuel VPN à la signature du logiciel, en passant par le stockage sécurisé).

Outre les inconvénients des solutions précitées, tous les produits de sécurité réseaux spécifiques au gouvernement ou à la défense par exemple ont la particularité d'avoir des éléments propriétaires en terme d'interface, de protocole, d'algorithme, d'utilisation et contextes d'emploi. Toutes ces spécificités favorisent l'hétérogénéité des équipements, des protocoles, des algorithmes et des interfaces ; elles empêchent leur interopérabilité et la mutualisation des services. Or, tous les organismes SSI civils ou gouvernementaux cherchent à rationaliser les moyens tant matériels qu'humains.

L'architecture proposée repose notamment sur la combinaison de plusieurs fonctions de sécurité qui, conjugués entre elle, offre une solution de confiance assurant une protection en « profondeur » (c'est-à-dire avec plusieurs couches successives « de moyens de sécurité »). En effet, cette architecture associe de manière judicieuse les caractéristiques suivantes :
- Une technologie Carte à puce, couplée à un clavier de confiance pour la saisie d'un code confidentiel,
- Un processeur de confiance,
- Une architecture électronique en coupure.

Le module sécurisé défini suivant une telle architecture doit, par la suite, être initialisé et configuré suivant des méthodes connues par l'Homme du métier telles que la pré-personnalisation et la personnalisation du dispositif en question.

L'objet de l'invention concerne un dispositif sécurisé nomade permettant d'assurer la confidentialité de données mémorisée ou la sécurité des échanges de données entre au moins deux domaines de niveaux de sensibilité différents **caractérisé en ce qu**'il comporte en combinaison au moins les éléments suivants :
une interface connectique adaptée à assurer l'échange entre un domaine utilisateur étant en environnement protégé et le dispositif nomade sécurisé,
   - un composant de confiance placé en coupure entre ladite interface connectique et le domaine extérieur composé par exemple d'un ou plusieurs des éléments suivants : différents composants mémoire et/ou d'autres interfaces connectées à un réseau non protégé, ledit composant de confiance contenant des ressources cryptographiques,
   - un moyen d'authentification adapté à autoriser l'accès à un nombre de services en fonction des droits possédés par un utilisateur,
   - ledit dispositif nomade sécurisé comportant une ligne de cloisonnement LC entre deux domaines de niveaux de sensibilité différents, le composant de confiance placé en coupure est disposé sur la ligne LC et étant disposé entre les deux domaines, les flux de données échangées entre les deux domaines passant obligatoirement par ledit composant.

Les domaines de niveaux de sensibilité différents sont, par exemple, des réseaux de type LAN (Local Area Network) ou encore de type WAN (Wide Area Network). Ils peuvent être constitués d'éléments réseaux tels que des PCs, des routeurs, des stations ou serveurs connus de l'Homme du métier ou encore de modem.

L'interface peut être une interface connectique est un contrôleur USB.

Le composant en coupure peut être un processeur.

Le moyen d'authentification est, par exemple, une carte à puce ou une carte SIM associé à un code PIN.

Le dispositif comporte, par exemple, une interface homme machine tel qu'un clavier/écran afin de compléter un service d'authentification.

Selon un mode de réalisation, le dispositif comporte une mémoire propre au processeur placé en coupure.

Le dispositif selon l'invention peut comporter au moins une ou plusieurs des fonctions suivantes stockées dans la mémoire :
Un logiciel de partitionnement mémoire du dispositif nomade sécurisé,
Un ou plusieurs applicatifs et/ou un système d'exploitation,
Un logiciel de mise à jours intégrés dans ledit dispositif,
Un logiciel d'échange sécurisé.
Le dispositif peut comporter un système anti-intrusion.
Le dispositif peut comporter un dispositif d'alimentation tel qu'une pile au lithium pour garantir notamment un service d'anti-intrusion actif.
Le dispositif anti-intrusion est, par exemple, un mécanisme actif adapté à transmettre un signal au processeur placé en coupure, ce dernier émettant un signal d'effacement de toutes les données mémorisées dans ledit dispositif en cas d'intrusion ou de tentatives d'intrusion.

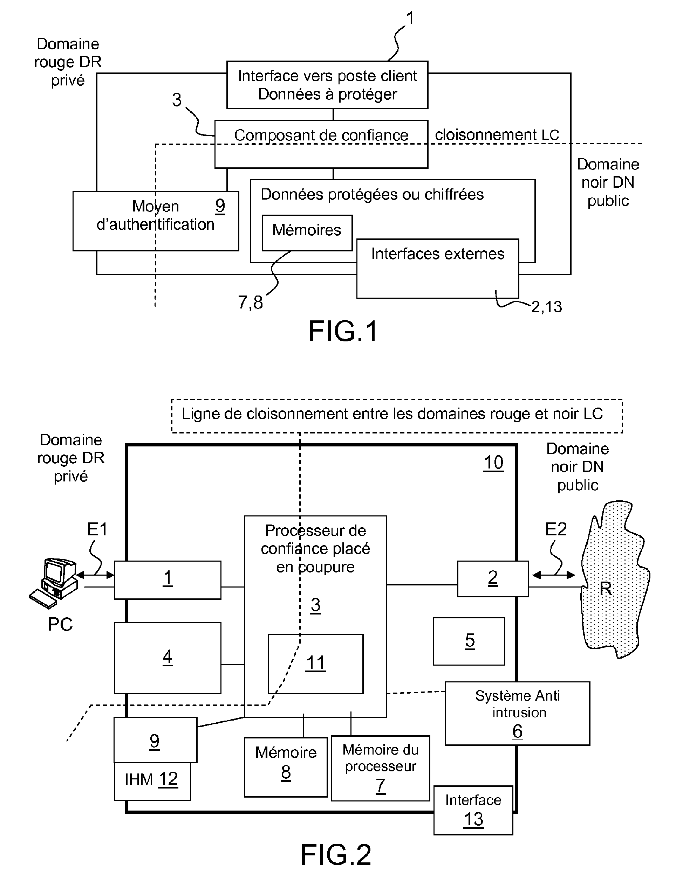

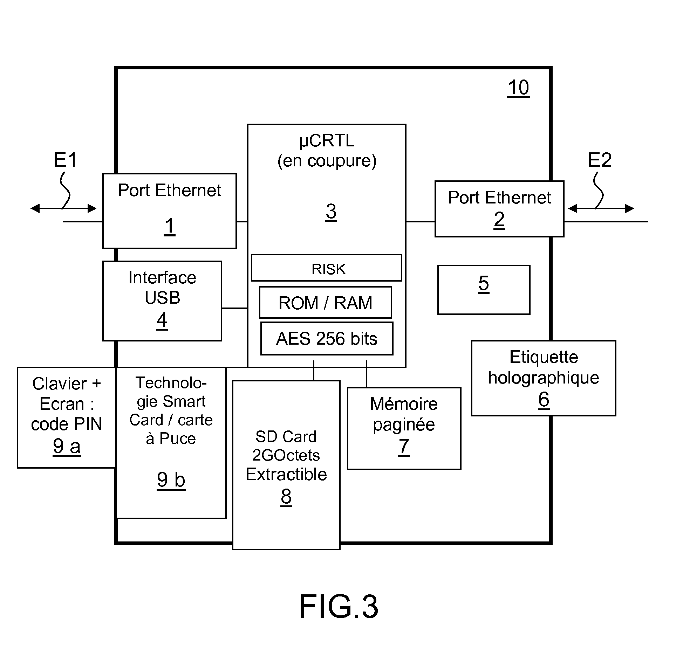

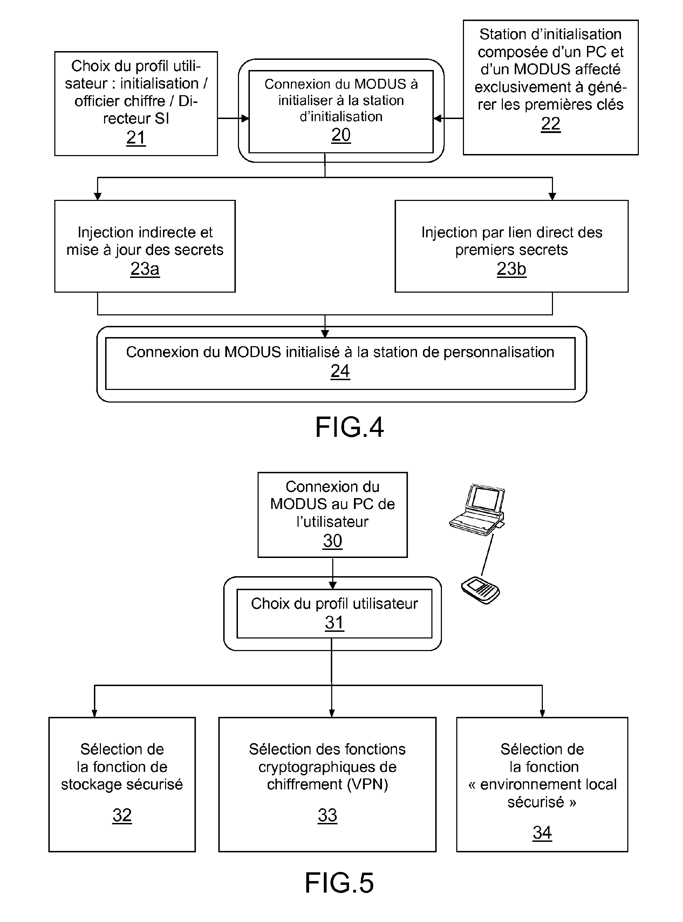

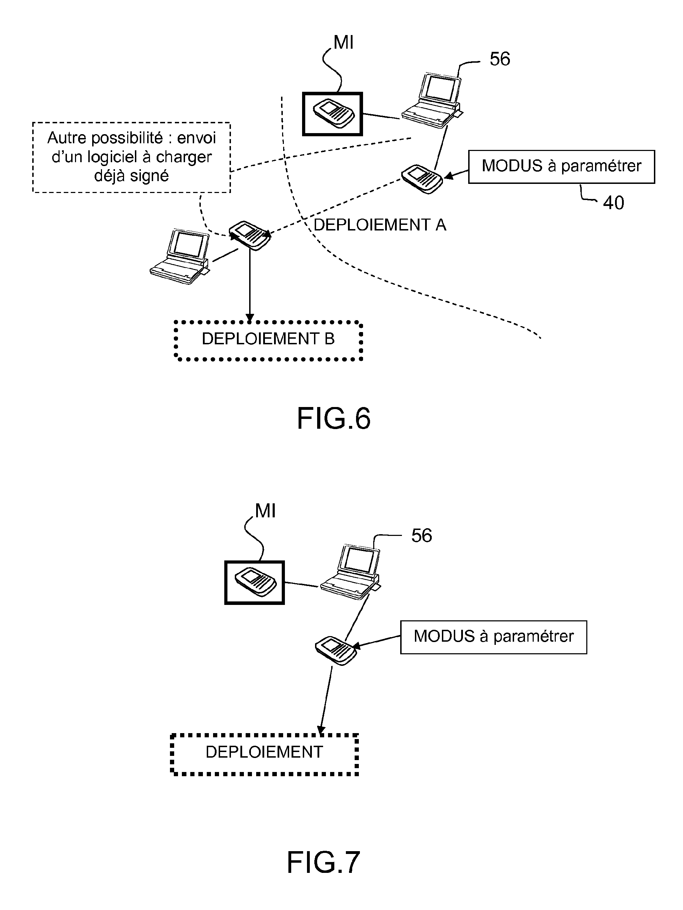

D'autres caractéristiques et avantages apparaîtront mieux à la lecture de la description qui suit annexée des figures qui représentent :
➢ La figure 1, un exemple de principe de l'architecture pour module sécurisé nomade selon l'invention,
➢ La figure 2, un exemple d'architecture selon l'invention d'un dispositif de mémorisation de données sécurisé,
➢ La figure 3, un exemple d'implémentation,
➢ La figure 4, un exemple de mécanisme d'initialisation du dispositif Modus Sécurisé ou MODUS,
➢ La figure 5, un exemple de dispositif système complet de pré-personnalisation et de personnalisation de l'architecture sécurisée selon l'invention,
➢ La figure 6, un exemple de dispositif système simplifié de pré-personnalisation de l'architecture sécurisée, et
➢ La figure 7, un exemple de mécanisme d'utilisation du MODUS.

L'architecture proposée est basée sur les éléments et modules fondamentaux suivants, décrits en relation aux figures 1 et 2 :
➢ un composant de confiance 3, par exemple un processeur, placé au coeur de la carte du module sécurisé 10 et donc des échanges de données. Autrement dit, le processeur 3 est placé en coupure entre le domaine privé et le domaine public.
   ○ Le domaine privé ou domaine rouge relie une interface (port /connectique vers l'extérieur) du dispositif sécurisé à l'ordinateur d'un utilisateur ou à un réseau local LAN protégé.
   ○ Le domaine public ou domaine noir est représenté (figure 2) soit par un réseau R de type WAN (Wide Area Network) pour la communication et les échanges de données, soit par une mémoire 8 présente dans le dispositif sécurisé selon l'invention. Des exemples de mémoire sont données ci-après.
   ○ Le composant de confiance est disposé sur une ligne de cloisonnement L qui marque une séparation fonctionnelle et du niveau de sécurité des domaines.
➢ Un moyen d'authentification robuste 9, tel qu'une carte puce munie d'un code PIN. Le sens du mot « robuste » est qu'il est quasiment impossible d'accéder aux données mémorisées sur la carte.

Sur la figure 2 est représenté un exemple d'architecture de dispositif sécurisé, MODUS, selon l'invention. Dans ce MODUS, une ligne L de cloisonnement sépare le domaine noir (domaine public) qui contient des informations non sensibles ou des informations chiffrées et le domaine rouge (domaine privé) qui comprend les données sensibles ou claires. Ces notions de domaine noir DN et de domaine rouge DR étant connues de l'Homme du métier, elles ne seront pas détaillées dans la présente description. Il en est de même pour les expressions relatives aux niveaux de sécurité, terme consacré dans le domaine de la sécurité.

Le MODUS sécurisé 10 selon l'invention comprend notamment les composants et modules suivants :
- Une interface connectique 1 adaptée à assurer l'échange de données entre le domaine rouge DR et le MODUS sécurisé 10, par exemple des échanges avec un PC, E1 ; cette interface est dédiée à l'utilisateur ou à une communauté d'utilisateurs ;
- le processeur 3 en charge d'appliquer des foncions cryptographiques 11, c'est-à-dire d'exécuter des algorithmes de chiffrement (par exemple l'algorithme AES 256 bits) et placé en coupure entre ladite interface connectique 1 et :
- une interface 2 permettant l'échange de données protégées, par exemple de la voix, de la vidéo vers le réseau R, échanges E2,
- différents composants mémoire : la mémoire 7 du processeur, une mémoire 8 ayant pour fonction le stockage des données sensibles (des applications, des données personnelles, ou encore un operating system protégés en confidentialité et en intégrité).
- les ressources cryptographiques 9 assurant notamment l'identification et l'authentification d'un utilisateur.
- une interface d'administration 4 en option. Ce port permet à l'utilisateur d'administrer le Module Sécurisé selon l'invention (MODUS) en transmettant des éléments de gestion tels que les paramètres de configuration (numéros de version logicielle, taille de mémoire disponible, etc.), des éléments de journalisation ou de reporting (liste des incidents, des évènements, des alarmes horodatées, etc.) ou des éléments réseaux (débits, Qualité de Service, etc.)

Le dispositif sécurisé 10 peut aussi comporter un système anti-intrusion 6. Ce système peut être passif ou actif à l'équipement et relié ou non au processeur. Dans le cas d'un dispositif passif, une étiquette holographique peut être utilisée pour sceller les deux coques formant le boîtier, dans le cas où la structure mécanique du boîtier est constituée d'un châssis et d'un capot garantissant l'intégrité de l'équipement ; ce dispositif peut être accompagné d'un dispositif actif, permettant notamment de détecter l'ouverture du boîtier et qui enverra au processeur 3 un signal qui effacera toutes les données stockées dans les différentes mémoires du dispositif.

Le dispositif comprend une alimentation constituée, par exemple, d'une batterie ou d'une pile 5. Cette source d'énergie 5 couplée au système d'anti-intrusion 6 permet de procéder à un effacement d'urgence des données stockées dans le dispositif en cas d'intrusion ou de tentative d'intrusion.

Le dispositif peut aussi comprendre une interface 13 pour l'alimentation. Cette interface est adaptée dans le cas où la consommation du module est supérieure aux capacités prévues par la batterie ou tout autre moyen d'alimentation, une alimentation par connectique USB, ou encore par Ethernet (POE) sont également possibles.

Le dispositif nomade sécurisé peut aussi comporter une interface Homme machine ou IHM, 12. L'IHM est, par exemple, composé d'un clavier et d'un écran : pour entrer un code pin (Personal Identification Number) ou encore n'importe quel autre mot de passe. Ce procédé peut aussi être remplacé par un procédé biométrique d'authentification. Ainsi, cette interface 12 couplée au moyen d'authentification 9 permet d'identifier un utilisateur du dispositif sécurisé. Elle permet aussi de sélectionner un profil d'utilisation, c'est-à-dire de déterminer un certain nombre de droits liés à un métier (simple utilisateur, administrateur, superviseur de parc d'équipements, etc.)

Le moyen d'authentification 9 peut être choisi parmi l'un des éléments suivants : une carte à puce, une carte SIM (Subscriber Identity Module) : celle-ci aurait été enfouie et intégrée dans l'équipement (non extractible depuis l'extérieur).

La mémoire de données noires 8 est, par exemple, une mémoire extractible. Sans sortir du cadre de l'invention elle peut être enfouie dans l'équipement selon une technique connue de l'Homme du métier. Cette mémoire de données noires contient l'ensemble des données (voix, vidéo, données, etc.) de l'utilisateur qui ont été chiffrés par le dispositif, et en particulier par les fonctions cryptographiques 11 du processeur placé en coupure.

La figure 3 représente un exemple d'implémentation dans lequel, la connectique 1 correspond à un port Ethernet, l'interface 2 est un port Ethernet, le processeur est un micro-processeur commercialisé par la société ATMEL ayant une capacité cryptographique AES 256 bits, l'interface 4 est une interface USB, la pile est une pile lon-Lithium, le dispositif comprend une étiquette holographique permettant de vérifier que la mécanique du dispositif n'est pas modifiée, la mémoire 7 est une mémoire paginée hybride RAM/ROM de 16 Méga octets, la mémoire 8 est une mémoire de type SC Card de 2 Goctets, le moyen d'authentification 9 est composé d'une part d'un clavier 9a avec écran pour l'introduction d'un code PIN, une technologie Smart Card/carte à puce.

La mise en oeuvre d'une clé USB MODUS se décompose, par exemple, de la manière suivante :
1. une Pré-personnalisation,
2. une Personnalisation et description des stations SP,
3. Utilisation du MODUS et du poste utilisateur.

Les figures 4 à 7 sont utilisées pour décrire ces différentes étapes.

### 1) La pré-personnalisation

La pré-personnalisation d'un dispositif selon l'invention peut être faite à l'usine par l'industriel constructeur du dispositif afin d'y installer les premiers programmes. Cette phase permet le chargement dans l'équipement du premier logiciel signé (il est signé car il faut garantir l'intégrité et l'authenticité du logiciel dans cet équipement).

Cependant, l'utilisateur final a la possibilité sur une station de personnalisation de charger un nouveau logiciel signé.
i) la pré-personnalisation Usine : l'initialisation des équipements non encore déployés

Un système permettant la pré-personnalisation est composé d'une station de signature SSG et d'un ou de plusieurs équipements nomades selon l'invention.

La pré-personnalisation sert à injecter les premiers secrets dans un équipement et à affecter l'équipement à un organisme (une banque, un groupe d'industriels, une administration, etc.). La pré-personnalisation sert notamment à paramétrer et à affecter l'équipement à un utilisateur unique ou à un groupe d'utilisateurs ou communauté.

La figure 4 schématise un exemple de mécanisme d'initialisation d'un dispositif sécurisé selon l'invention. Le MODUS à initialiser est connecté à une station d'initialisation 22 composée d'un PC, par exemple, contenant une base de données chiffrées des éléments secrets injectés dans les équipements sécurisés nomade, d'un module sécurisé dédié à cette fonction. Cette station est hors ligne c'est-à-dire non connectée à un réseau quelconque. Le module d'initialisation est utilisé comme une ressource qui génère les clés ; autrement dit ce module crée les premiers secrets qui seront injectés dans les équipements (certificats, clés asymétriques, bi-clés publiques et privées), clés symétriques, etc.). Un MODUS sécurisé selon l'invention est affecté exclusivement à l'initialisation des équipements. En d'autres termes, il est dédié à la génération des premières clés (station hors ligne officier/chiffre, directeur de la sécurité SI). Une étape permet selon un choix de profil d'utilisateur l'initialisation du MODUS par le Directeur en charge de la sécurité ou encore de l'officier chiffre 21. L'initialisation du MODUS s'effectue par exemple :
23a : soit avec injection directe et mise à jour des secrets par envoi ou transfert du fichier signé par la station d'initialisation 22 vers la station de personnalisation.
23b : par injection directe des premiers secrets qui peuvent être : une clé symétrique de trafic, une bi-clé symétrique, publique/privée, un certificat, ou encore le programme d'exécution embarqué dans le MODUS à paramétrer, etc.

L'étape 24 suivante concerne la connexion du MODUS initialisé à la station de personnalisation pour affectation de l'équipement à un utilisateur : des paramètres réseau, des paramètres utilisateurs.

La station de signature SSG est, par exemple, détenue par un industriel. Elle est composé d'un module sécurisé (appelé module d'initialisation car son usage est unique) connecté en permanence à un PC dédié à cette fonction d'initialisation. Elle garantit que les programmes implémentés dans le module sécurisé sont intègres et authentiques. Dans un système nomade sécurisé selon l'invention, le procédé va alors, au moyen d'un module d'initialisation, exécuter les étapes suivantes :
a) Installer dans le module sécurisé le certificat de signature autorisé,
b) Procéder au chargement du logiciel signé par le client ou bien par sa Direction des systèmes d'information au moyen d'une station de personnalisation SP.

### ii) La pré-personnalisation en cas de déploiement déjà effectué

Une autre possibilité est de permettre éventuellement au client de signer les logiciels avec une station de personnalisation SP pour des équipements préalablement initialisés. Dans ce cas, la SP effectue des tâches de pré-personnalisation afin d'éviter le retour usine de tous les équipements qui auraient été déployés. Ainsi, une SP peut mettre à jour l'ensemble des logiciels d'un MODUS sans l'utilisation d'une SSG.

En outre, la station de personnalisation procède aussi à l'affectation de l'équipement sécurisé nomade à un utilisateur ou une communauté d'utilisateurs. Autrement dit, la SP permet la mise à jour d'une base de données chiffrées. Une station de personnalisation est composée aussi d'un PC de personnalisation et d'une ressource cryptographique, c'est-à-dire d'un équipement sécurisé qui est affecté et dédié à cette fonction et qui, par définition, est non nomade.

Un système nomade selon l'invention contient la clé de signature du code qui a été préalablement chargée.

Pour paramétrer un module sécurisé nomade, le procédé exécute, par exemple, les étapes suivantes :
- Installer dans le module sécurisé nomade le certificat de signature du code qui est lui-même signé par la clé privée de pré-personnalisation ;
- Procéder à la signature du code par la station de personnalisation ;
- Charger le code signé dans le module sécurisé nomade ;
- Le module sécurisé nomade vérifie la signature du code chargé avant son activation.

### 2) Description de la station de personnalisation

Une station de personnalisation (SP) est, par exemple, un équipement sécurisé selon l'invention ou MODUS dédié et un PC non connecté à un réseau. Le PC dialogue avec le dispositif nomade sécurisé qu'il faut personnaliser via une liaison sécurisée. Le PC peut être un PC portable de type bureautique comprenant un ou plusieurs ports USB permettant le dialogue avec l'interface connectique du dispositif nomade. Le PC peut être relié à une imprimante afin de générer des rapports (indiquer et relever les journaux, gérer les alarmes, administrer les incidents techniques, offrir un service de gestion de l'heure/horodatage, etc.).

La SP procède à l'affectation de l'équipement sécurisé nomade à un utilisateur ou une communauté d'utilisateurs. Autrement dit, elle permet la mise à jour d'une base de données chiffrées.

Une station de personnalisation est composée aussi d'un PC de personnalisation et d'une ressource cryptographique, c'est-à-dire un équipement sécurisé qui est affecté et dédié à cette fonction et qui, par définition, est non nomade (MODUS de personnalisation).

Les fonctions de sécurité d'une station de personnalisation réalisées par des applications sur une station de personnalisation sur PC peuvent être choisies parmi la liste des applications suivantes données à titre illustratif et nullement limitatif :

Un dispositif nomade sécurisé comprend au moins une ou plusieurs fonctions choisies parmi :
- La fonction de partitionnement mémoire des dispositifs nomades sécurisés,
- La fonction installation d'applicatifs ou de système d'exploitation OS, sur le dispositif nomade sécurisé,
- La fonction mise à jour des logiciels intégrés dans le dispositif nomade sécurisé,
- Une fonction permettant l'échange sécurisé.

Il comporte aussi les fonctions locales suivantes :
- L'authentification des utilisateurs de la station de personnalisation se fait par l'officier de sécurité ou l'utilisateur au moyen d'un dispositif nomade sécurisé,
- La gestion de la clé de signature des logiciels,
- La gestion des logiciels, applicatifs, et du ou des OS,
- L'import du logiciel de l'industriel
   - Import du logiciel de l'industriel non signé,
   - Signature du logiciel de l'industriel,
   - Importation des applicatifs et des systèmes d'exploitation OS à charger sur les clés,
- Gestion de base de données pour la gestion de parcs,
   - La gestion de base de données (par exemple le logiciel MySQL),
   - La fonction de tri suivant des critères donnés,
   - La définition des critères selon l'organisme ou l'entreprise (tels que la localisation des équipements au moyen d'une cartographie, la gestion des emplacements des équipements dans la topologie réseau, la gestion de configurations, numéros de série de l'équipement cryptographique, numéros de version logicielle, numéro de configuration des paramètres réseau, etc.),
   - La sauvegarde signée et chiffrée de la base de données sur CD/DVD, par exemple,
   - La base de données signée et chiffrée,
- L'effacement local des données transférées à la clé, dans le cas d'une détection d'intrusion,
- La gestion d'un journal local de sécurité.

L'utilisation des fonctions de personnalisation peut être faite suivant deux modes, par exemple :
■ Soit au moyen d'une SP, mode administré,
■ Soit au moyen d'un MODUS, mode manuel.

Les fonctions de personnalisation peuvent être utilisées au moyen d'une SP ou bien au moyen d'un dispositif nomade sécurisé selon l'invention qui possède un Profil « Officier de sécurité/Directeur SI ». Ainsi, ce profil permet à partir d'un poste PC standard connecté à un MODUS d'accéder aux fonctions suivantes (sans l'utilisation d'une station de personnalisation) :
○ Gestion des paramètres liés à l'authentification des utilisateurs,
○ Configuration de la mémoire interne,
○ Activation et inhibition de fonctionnalités,
○ Gestion des modes d'utilisation et des mécanismes cryptologiques,
○ Gestion des incidents de sécurité (déverrouillage d'une clé bloquée),
○ Installation d'OS, d'applications et de données,
○ Profil utilisateur avec station de personnalisation.

### 3) Utilisation du dispositif sécurisé selon l'invention MODUS et du poste utilisateur

La figure 5 représente un exemple d'utilisation d'un dispositif nomade sécurisé qui comprend, par exemple, l'exécution des étapes suivantes : le dispositif nomade sécurisé se connecte 30 par l'intermédiaire de sa connectique USB 1 à un port USB d'un poste utilisateur PC. L'étape suivante consiste à choisir le profil de l'utilisateur 31 sélectionné par l'utilisateur lui-même suivant les droits qui lui ont été attribués. En fonction du profil utilisateur, la station d'initialisation va sélectionner :
- La fonction de stockage sécurisée, ce qui conduit à une utilisation du dispositif sécurisé nomade en ressource cryptographique,
- Les fonctions cryptographiques ou de chiffrement ou VPN (Virtual Private Network) ; dans ce cas, le dispositif selon l'invention ou Modus sera utilisé pour la production de signature logicielle ou encore le Modus sera utilisé en mode de chiffreur IP placé en coupure matérielle, 33,
- La sélection de la fonction « environnement local sécurisé », 34 ; dans ce cas, le Modus sera utilisé comme une plate-forme de « boot » avec un système d'exploitation mémorisé et protégé en intégrité.

L'utilisation d'un MODUS sécurisé peut s'effectuer en exécutant, par exemple, les étapes suivantes : après connexion du dispositif nomade sécurisé à un port de type USB d'un PC (poste utilisateur) ; le Modus sécurisé exécute, grâce à son processeur 3 placé en coupure et les différents composants les étapes suivantes :
■ Authentification (moyen d'authentification 9) des utilisateurs avant activation de la clé par la fourniture d'une carte à puce et de la saisie du code de déblocage de la carte sur le clavier de confiance du MODUS 12,
■ Stockage sécurisé 8 en confidentialité et en intégrité de données utilisateur dans le MODUS,
■ Fourniture de services cryptographiques 11 à travers, par exemple, une interface PKCS # 11,
   ○ Stockage de clés de chiffrement AES 256 bits,
   ○ Stockage de clés RSA 2048 bits,
   ○ Stockage de certificat au format X509,
   ○ Fourniture d'un service de chiffrement et de déchiffrement de données,
   ○ Signature et vérification de signature,
   ○ VPN ipsec.
■ Environnement de confiance local : un programme d'initialisation et un système d'exploitation et un OS de confiance sur le dispositif nomade sécurisé (pour exemple, Linus sécurisé).

En cas d'application « nomade » ou mobile, le processeur du PC (qui n'est forcément de confiance) exécute le programme d'initialisation et le système d'exploitation qui est placé en mémoire (mémoire du processeur 7) du dispositif nomade sécurisé. Le processeur 3 du dispositif nomade sécurisé ne fait que le déchiffrement des données noires qui ont été préalablement chiffrées par le même processeur 3 placé en coupure. Le logiciel est garanti intègre dans la mémoire noire du dispositif mémoire 8 (cela veut dire que personne n'a pu l'altérer). Ainsi, son environnement nomade est de confiance car il utilise en fait les données qui sont sur son module sécurisé et non celles du PC sur lequel il utilise simplement l'écran et le clavier.

Par exemple, les applications envisageables pour le dispositif nomade sécurisé décrit précédemment sont les suivantes :
- Les équipements cryptographiques (EC) qui sont placés en coupure matérielle dans un réseau sensible ou de défense comme les chiffreurs IP individuels de défense,
- Les ordinateurs de poche (PDA : Personal Digital Assistant, ou assistant numérique personnel),
- Terminal ou lecteur de carte à puce (pour sécuriser les paiements par exemple),
- Equipements de Chiffrement de phonie IP (Téléphone sécurisé, ...).
- Des terminaux bancaires ou lecteurs de carte à puce de haute sécurité,
- Clés USB (pour servir de coffre-fort individuel).

Le dispositif selon l'invention peut se présenter sous la forme d'une clé USB. La figure 6 schématise un exemple de mécanisme complet de pré-personnalisation d'un modus à sécuriser qui comprend, notamment l'installation dans le MODUS du certificat de signature du code, la signature du code par la station de signature SSG station hors ligne, le chargement du code signé dans la clé MODUS et la vérification par la clé que la signature du code est bien chargée avant son activation. Un Modus d'initialisation contient la clé de signature du code. Le Modus paramétré peut ensuite être déployé (déploiement A sur la figure). Une autre possibilité consiste à envoyer un logiciel à charger déjà signé, et déployer le MODUS, déploiement B.

La figure 7 représente un exemple de mécanisme simplifié de pré-personnalisation. Un MODUS de personnalisation contenant la clé de signature du code et une station PC permettent de paramétrer le MODUS en exécutant les étapes suivantes :
1- installer dans le MODUS sécurisé du certificat de signature du code qui est lui-même signé par la clé privée de pré-personnalisation,
2- signer le code par la SP,
3- charger le code signé dans la clé MODUS,
4- la clé vérifie ensuite la signature du code chargé avant son activation.

Le MODUS sécurisé ainsi mis à jour peut ensuite être de nouveau déployé.

Cette architecture offre une solution simple, de sécurité, efficace fiable au plus près de la réalité terrain (près des machines et des problèmes réseau). Les avantages de la solution sont les suivants :
○ Une sécurité renforcée (combinaison de moyens techniques),
○ Une grande évolutivité et grande adaptabilité au besoin client : possibilité de changer la taille mémoire : cette caractéristique offre la possibilité de rendre pérenne la solution.

Cette innovation est implémentable dans n'importe quel équipement de sécurité nomade et/ou individuel (de défense mais aussi civil).

## Revendications

1. Dispositif sécurisé nomade (10) permettant d'assurer la confidentialité de données mémorisée ou la sécurité des échanges de données entre au moins deux domaines de niveaux de sensibilité différents **caractérisé en ce qu'**il comporte en combinaison au moins les éléments suivants :
• une interface connectique (1, 4) adaptée à assurer l'échange entre un domaine utilisateur étant dans un environnement protégé et le dispositif nomade sécurisé,
• un composant de confiance (3) placé en coupure entre ladite interface connectique (1, 4) et le domaine extérieur (2, 7, 8),
• un moyen d'authentification (9, 12) adapté à autoriser l'accès à un nombre de services en fonction des droits possédés par un utilisateur,
• ledit dispositif nomade sécurisé comportant une ligne de cloisonnement LC entre deux desdits domaines de niveaux de sensibilité différents, le composant de confiance (3) placé en coupure est disposé sur la ligne LC et étant disposé entre les deux domaines, les flux de données échangées entre les deux domaines passant obligatoirement par ledit composant.

2. Dispositif nomade sécurisé selon la revendication 1 **caractérisé en ce que** l'interface connectique (1) est un contrôleur USB.

3. Dispositif nomade sécurisé selon la revendication 1 **caractérisé en ce que** le domaine extérieur comporte un ou plusieurs des éléments suivants : des composants mémoires (8), des interfaces connectées à un réseau non protégé (2).

4. Dispositif selon la revendication 1 **caractérisé en ce que** ledit composant placé en coupure entre domaine privé et public est un processeur (3) contenant des fonctions cryptographiques internes (11).

5. Dispositif nomade sécurisé selon la revendication 1 **caractérisé en ce que** le moyen d'authentification (9) est une carte à puce ou une carte SIM associé à un code PIN.

6. Dispositif nomade sécurisé selon la revendication 1 **caractérisé en ce qu'**il comporte un système anti-intrusion (6).

7. Dispositif nomade sécurisé selon la revendication 6 **caractérisé en ce que** le dispositif anti-intrusion (6) est un mécanisme actif adapté à transmettre un signal au processeur placé en coupure (3), ce dernier émettant un signal d'effacement de toutes les données mémorisées dans ledit dispositif en cas d'intrusion ou de tentatives d'intrusion.

8. Dispositif nomade sécurisé selon la revendication 1 **caractérisé en ce qu'**il comporte un dispositif d'alimentation tel qu'une pile au lithium (5) pour garantir un service d'anti-intrusion.

9. Dispositif nomade sécurisé selon la revendication 1 **caractérisé en ce qu'**il comporte une interface homme machine tel qu'un clavier/écran (12) afin de compléter un service d'authentification.

10. Dispositif nomade sécurisé selon la revendication 2 **caractérisé en ce que** le processeur placé en coupure comporte une mémoire propre (7).

11. Dispositif nomade sécurisé selon la revendication 2 **caractérisé en ce que** la mémoire (8) comporte au moins une ou plusieurs des fonctions suivantes stockées :
• Un logiciel de partitionnement mémoire du dispositif nomade sécurisé,
• Un ou plusieurs applicatifs et/ou un système d'exploitation,
• Un logiciel de mise à jours intégrés dans ledit dispositif,
• Un logiciel d'échange sécurisé.

12. Utilisation du dispositif selon l'une des revendications 1 à 11 pour des échanges de données dans des réseaux constitués de PCs, routeurs, stations, serveurs et ou les domaines de niveaux de sensibilité différents sont des réseaux tels que des LAN ou des WAN.
